Europäisches Patentamt

European Patent Office

Office européen des brevets

(19)

(11) Numéro de publication: **0 172 445 B1**

## (12) FASCICULE DE BREVET EUROPEEN

(45) Date de publication du fascicule du brevet:
**08.11.89**

(21) Numéro de dépôt: **85109425.0**

(22) Date de dépôt: **26.07.85**

(51) Int. Cl.⁴: **G 01 S 13/02, A 63 B 29/02**

(54) Transpondeur passif, notamment pour la recherche de personnes victimes d'une avalanche.

(30) Priorité: 30.07.84 CH 3693/84
16.08.84 FR 8412950

(43) Date de publication de la demande:
**26.02.86 Bulletin 86/9**

(45) Mention de la délivrance du brevet:
**08.11.89 Bulletin 89/45**

(84) Etats contractants désignés:
**AT CH DE IT LI SE**

(56) Documents cités:
**DE-A- 2 118 309
DE-A- 2 628 193
DE-B- 2 555 505
FR-A- 2 455 749
US-A- 3 798 642**

**Le dossier contient des informations techniques
présentées postérieurement au dépôt de la demande et
ne figurant pas dans le présent fascicule.**

(73) Titulaire: **ASULAB S.A., Faubourg du Lac 6,
CH-2501 Bienne (CH)**

(72) Inventeur: **Leuenberger, Claude-Eric, Grand-Chézard 5,
CH-2054 Chézard (CH)**

(74) Mandataire: **Gresset, Jean et al, ICB Ingénieurs Conseils
en Brevets SA Passage Max. Meuron 6,
CH-2001 Neuchâtel (CH)**

ACTORUM AG

## Description

La présente invention est relative à un système de détection à distance de personnes ou d'objets à l'aide d'énergie hyperfréquence. Plus particulièrement, l'invention concerne un tel système conçu pour rechercher des personnes accidentées, victimes d'avalanches.

Par le brevet US-A-4 331 957, dont le correspondant français porte le numéro FR-A-2 455 749, il est déjà connu de réaliser un système du type indiqué ci-dessus, à l'aide d'un élément transpondeur passif destiné à être porté par une personne, et d'un ensemble émetteur-récepteur émettant à une hyperfréquence donnée $f_o$ et accordé sur une fréquence de réception $2f_o$, l'énergie rayonnée par l'émetteur après avoir frappé le transpondeur étant renvoyée en partie par celui-ci avec une fréquence double de la fréquence d'émission. Dans un tel système, il convient naturellement de rejeter dans le spectre d'émission de l'émetteur la composante $2f_o$, ce qui explique l'utilisation de la bande des hyperfréquences dans laquelle une telle réjection appartient tout à fait au domaine du possible. En pratique, on peut ainsi utiliser pour la fréquence $f_o$ une valeur de l'ordre du Gigahertz.

Le transpondeur décrit dans le brevet précité est réalisé conformément à la figure 1 des dessins annexés. Une plaquette A en une matière diélectrique est recouverte sur toute sa surface par une feuille de protection B et entre cette plaquette et cette feuille est prise en sandwich une antenne C. Celle-ci est réalisée à partir d'une feuille métallique et présente deux éléments rayonnants $D_1$ et $D_2$ raccordés ensemble par un composant passif non linéaire E, plus particulièrement une diode à caractéristique courant – tension quadratique. En outre, les deux éléments rayonnants sont connectés entre eux par un conducteur F. On notera également que chaque élément rayonnant $D_1$ et $D_2$ se rétrécit à partir d'une zone d'extrémité de largeur l jusqu'à former, du côté opposé, une pointe de connexion à la diode.

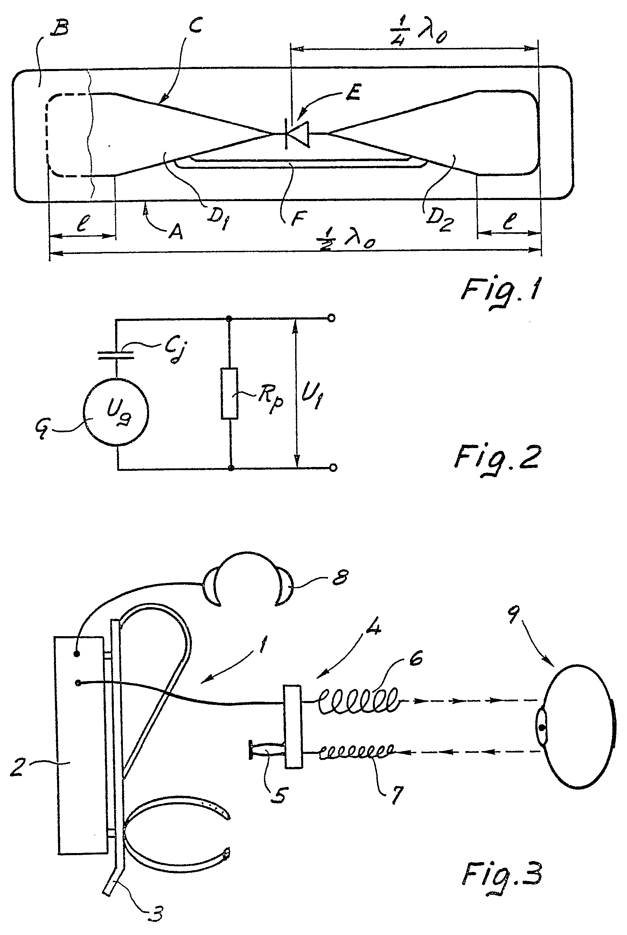

On a représenté sur la figure 2 le schéma équivalent du transpondeur de la figure 1. Pour que l'antenne puisse capter un maximum d'énergie à la fréquence $f_o$, il convient de lui donner au moins approximativement une longueur $\frac{1}{2} \lambda_o$, qui est la demi-longueur d'onde de la fréquence qu'elle reçoit de l'émetteur. Par ailleurs, chaque élément rayonnant $D_1$ et $D_2$ a une longueur $\frac{1}{4} \lambda_o$ pour pouvoir émettre à la fréquence $2f_o$ à laquelle l'énergie captée par l'antenne est émise grâce à la diode E. Dès lors, on peut assimiler l'antenne, dans sa configuration de réception de l'énergie, à un générateur G produisant une tension $U_g$ à la fréquence $f_o$ et débitant via une capacité $C_j$ qui est celle de la diode E dans un circuit utilisateur formé par les éléments rayonnants $D_1$ et $D_2$ avec une certaine perte en énergie qui est symbolisée ici par la résistance $R_p$. La tension $U_1$ de sortie du circuit sera donc inférieure à la tension du générateur G.

Pour obtenir un meilleur rendement de transformation de l'énergie à la fréquence $f_o$ en de l'énergie à la fréquence $2f_o$, le brevet américain précité prévoit de relier ensemble les deux éléments rayonnants par le conducteur F. Celui-ci constitue un trajet de dérivation pour le courant continu et provoque une certaine polarisation de la diode E qui peut alors être employée avec un point de fonctionnement situé plus haut dans sa caractéristique courant – tension.

Pour fixer les idées, il est utile de noter que la longueur de l'antenne peut être d'environ 125 mm, sa largeur étant de 22 mm, par exemple, ces dimensions étant nécessaires pour obtenir, avec une certaine puissance d'émission de l'appareil de recherche, une réflexion d'énergie perceptible par le récepteur de cet appareil et exploitable pour la recherche de personnes.

L'invention a pour but de fournir un transpondeur conçu selon le principe que l'on vient d'évoquer, mais qui, soit engendre une puissance ré-émise plus élevée, pour des dimensions comparables à celles du transpondeur de la technique antérieure, soit produit, avec des dimensions plus faibles, une puissance ré-émise comparable à celle engendrée par ce transpondeur antérieur.

L'invention a donc pour objet un transpondeur du type passif destiné notamment à la recherche de personnes, à l'aide d'un émetteur-récepteur de recherche capable d'émettre à une première fréquence et de recevoir à une seconde fréquence harmonique de cette première fréquence, ce transpondeur étant capable de recevoir à ladite première fréquence et d'émettre à ladite seconde fréquence et comportant un support diélectrique auquel est fixée une antenne réalisée en une feuille mince conductrice, ladite antenne comportant un composant passif non linéaire ainsi qu'une portion de conduction électriquement parallèle à ce composant et constituant une dérivation en courant continu pour la polarisation de celui-ci, ce transpondeur étant caractérisé en ce que ladite feuille mince présente une découpe dont le bord définit un trajet de conduction refermé sur le composant passif, la forme de ladite découpe étant sélectionnée de façon à constituer, d'une part, ladite dérivation en courant continu et, d'autre part, une boucle de self-induction formant avec la capacité propre du composant un circuit résonnant à ladite première fréquence.

Il résulte de ces caractéristiques que la transformation par l'antenne de l'énergie reçue par le transpondeur à la fréquence $f_o$ en de l'énergie disponible pour la ré-émission par ce transpondeur à une fréquence harmonique de la fréquence $f_o$, est réalisée avec un meilleur rendement, puisque le couple self-induction – capacité propre du composant provoque grâce à un meilleur facteur de qualité du circuit résonnant, une augmentation de la tension à laquelle la transformation se produit. Ceci a pour effet, que le composant non linéaire travaille à un point plus favorable de fonctionnement de sa caractéristique courant – tension.

L'invention sera mieux comprise à l'aide de la description qui va suivre et des dessins qui l'illustrent à titre d'exemple. Sur ces dessins:

La figure 1 représente schématiquement un transpondeur de la technique antérieure;

La figure 2 est un schéma électrique équivalent de ce transpondeur;

La figure 3 montre schématiquement un système de recherche de personnes utilisant un transpondeur suivant l'invention;

La figure 4 montre une vue schématique d'un transpondeur conçu suivant l'invention;

La figure 4A représente à plus grande échelle le détail du transpondeur de la figure 4 entouré de la ligne en traits mixtes 0;

La figure 5 est un circuit électrique équivalent du transpondeur de la figure 4;

La figure 6 est un diagramme comparatif relatif au fonctionnement des transpondeurs des figures 1 et 4;

La figure 7 représente une montre dont le bracelet est pourvu d'un transpondeur du type représenté à la figure 4;

La figure 7A est une vue en coupe longitudinale du bracelet de la figure 7;

La figure 8 représente une montre dont le bracelet est pourvu d'un transpondeur conçu suivant un autre mode de réalisation de l'invention;

La figure 8A est une vue en coupe longitudinale du bracelet représenté à la figure 8;

Les figures 9 et 10 sont des vues représentant d'autres modes de réalisation de l'invention.

On va tout d'abord se référer à la figure 3 sur laquelle apparaît le schéma fonctionnel d'un système de recherche de personnes utilisé avec des transpondeurs suivant l'invention.

Ce système comporte un ensemble 1 émetteur-récepteur logé dans un boîtier 2 qui, dans cet exemple, est réalisé sous la forme d'un boîtier portatif. Le boîtier est solidaire d'un harnais 3 pouvant être attaché sur le dos d'une personne chargée de la recherche. Le boîtier 2 qui contient une source d'énergie ainsi que tous les circuits d'émission et de réception nécessaires (connus en soi) est relié à un ensemble d'antennes 4 que la personne peut manipuler à l'aide d'une poignée 5. Cet ensemble comporte une antenne d'émission 6 accordée sur la fréquence $f_o$ ainsi qu'une antenne de réception 7 accordée sur la fréquence $2f_o$. L'ensemble émetteur-récepteur comporte également un transducteur acoustique, tel qu'un casque 8 à l'aide duquel la personne préposée à la recherche peut constater acoustiquement qu'une réponse est reçue sur l'antenne 7. Dans l'exemple représenté, il est supposé que l'ensemble émetteur-récepteur 1 est destiné à coopérer avec des transpondeurs suivant l'invention portés par des personnes qui, en évoluant par exemple en haute montagne, risquent de subir une avalanche. Dans l'exemple de la figure 3, les transpondeurs sont supposés être incorporés dans des montres-bracelets 9 d'une manière qui sera expliquée par la suite.

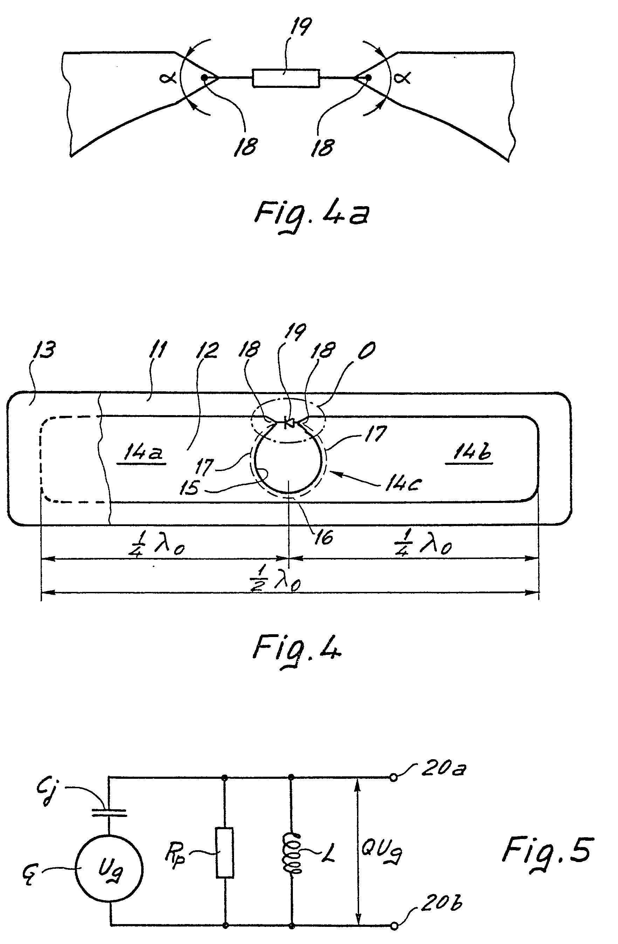

On a représenté sur les figures 4 et 4A un premier mode de réalisation du transpondeur suivant l'invention. Celui-ci comporte une lamelle 11 en un matériau diélectrique, rigide ou souple, sur laquelle est apportée, par exemple par collage ou autre, une mince feuille de métal 12 qui constitue l'antenne du transpondeur. Celle-ci est recouverte d'une feuille de protection 13, électriquement neutre, et fixée, par exemple par collage, sur la lamelle de base 11.

L'antenne 12 elle-même comporte essentiellement trois parties, à savoir deux éléments rayonnants 14a et 14b s'étendant dans le prolongement l'un de l'autre et de part et d'autre d'une partie médiane 14c. Celle-ci présente une découpe 15, de préférence de forme circulaire et placée symétriquement au milieu de l'ensemble de l'antenne 12. La découpe 15 délimite dans la partie médiane 14c de l'antenne tout d'abord un passage de courant 16 situé sur l'un des côtés de l'antenne, ensuite des bords 17 qui suivent la périphérie de la découpe 15 et enfin deux portions pointues 18 (voir en particulier figure 4A) servant au raccordement d'une diode 19 qui, dans le mode de réalisation représenté, constitue le composant non linéaire du transpondeur.

Bien que la forme de la découpe 15 ne soit pas critique sur le plan du rendement de transformation de l'antenne 12, il s'est avéré que la forme circulaire est très satisfaisante, toute discontinuité dans cette forme apportant une perturbation de ce rendement. Il est à noter toutefois que d'autres formes de la découpe se sont avérées possibles et notamment une forme de trou de serrure, une forme triangulaire à pans droits, etc. Par ailleurs, on a constaté que ce rendement peut être meilleur si les points de raccordement de la diode 19 sont de forme pointue comme représenté en 18 sur la figure 4A, l'angle $\alpha$ de chaque pointe étant choisie de préférence à 60°. Le composant non linéaire est de préférence constitué par une diode de Schottky destinée à la détection des signaux dans la gamme des fréquences de l'ordre du Gigahertz, celle fabriquée par la société Hewlett-Packard sous le No 5082-2835 s'étant avérée la plus appropriée. La caractéristique courant – tension de cette dernière est quasi quadratique.

On va maintenant examiner le fonctionnement de l'antenne de la figure 4 à l'aide de la figure 5 qui en est le schéma équivalent supposé. En effet, on pense que l'amélioration du rendement de transformation de l'antenne 12 est provoquée par la création dans l'antenne d'une self-induction qui est située dans la partie 14c et qui est délimitée par la découpe 15. Cette configuration particulière constitue un trajet de courant refermé sur la diode 19 et composé de l'étranglement 16, des bords 17 et des pointes 18 qui forment une boucle d'une spire présentant une certaine impédance à la fréquence de fonctionnement de l'antenne 2. Par conséquent, comme représenté à la figure 5, on peut supposer qu'à la fréquence $f_o$, l'antenne constitue un générateur G fournissant une tension $U_g$ raccordée en série avec la capacité de jonction $C_j$ de la diode 19, l'ensemble étant connecté en parallèle à une résistance de perte $R_p$ et à une self-induction L.

Le circuit équivalent de la figure 5 constitue ainsi un circuit résonnant accordé sur la fréquence $f_o$ de sorte que la tension aux bornes 20a et 20b du circuit est égale à la tension $U_g$ du générateur multiplié par le facteur de qualité Q. Les calculs théoriques montrent que ce facteur peut être de l'ordre de 3 ou 4 ou plus suivant la forme de la découpe 15.

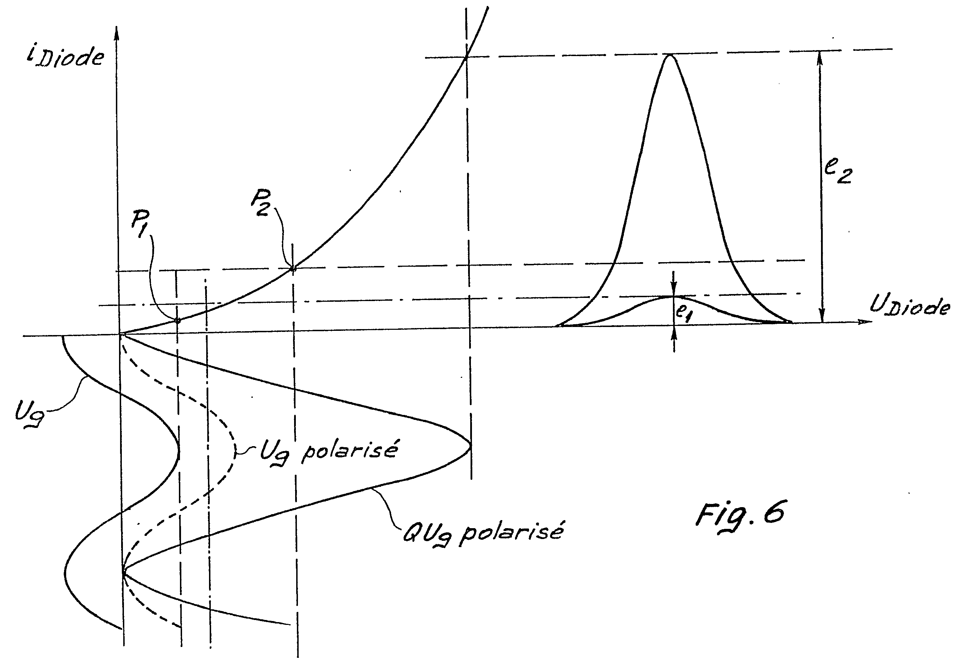

La figure 6 montre comment le point de fonctionnement du composant non linéaire peut être décalé sur sa caractéristique grâce à l'effet conjugué de la polarisation de la diode 19 et de l'augmentation de la tension de sortie du circuit de la figure 5.

Alors que l'antenne de la technique antérieure permet d'obtenir un point de fonctionnement $P_1$ donnant lieu à une excursion maximale e1 du courant de sortie du montage, le fait de prévoir dans l'antenne une self-induction L permet de décaler le point de fonctionnement P1 vers un point $P_2$ situé plus haut sur la caractéristique de la diode, l'excursion maximale du courant de sortie étant alors égale à e2.

Il en résulte en définitive un rendement nettement meilleur que par le passé de la transformation de l'énergie reçue par l'antenne 12 en de l'énergie émise, puisqu'une part nettement plus importante de l'énergie est rendue disponible pour être dégagée dans les éléments rayonnants 14a et 14b et être émise vers l'antenne de réception 7 (fig. 3) de l'ensemble émetteur-récepteur 1.

Dans le mode de réalisation de la figure 4, on a choisi pour la longueur de l'antenne 12 une valeur qui correspond approximativement à la demi-longueur d'onde $\lambda_o$ de la fréquence d'émission, tandis que les éléments rayonnants 14a et 14b ont chacun une longueur à peu près égale à $\frac{1}{4} \lambda_o$ pour être accordés sur la fréquence $2f_o$. Bien entendu, le choix de ces dimensions impose en définitive une contrainte au dimensionnement du transpondeur si on veut capter, avec une certaine énergie émise par l'émetteur-récepteur 1, une énergie maximale renvoyée sur l'antenne réceptrice 7.

En d'autres termes, avec un même appareillage de recherche (puissance d'émission et sensibilité de réception égales), la probabilité avec laquelle un transpondeur suivant l'invention sera localisé sous la neige sera nettement plus grande qu'avec les transpondeurs du type de la figure 1. Cependant, grâce à l'augmentation de rendement apportée par l'invention, la probabilité de détection reste tout à fait satisfaisante même si le transpondeur n'est pas accordé sur les fréquences $f_o$ et $2f_o$. Ceci revient à dire qu'au prix d'une énergie renvoyée plus faible mais néanmoins suffisante, les dimensions du transpondeur peuvent être réduites.

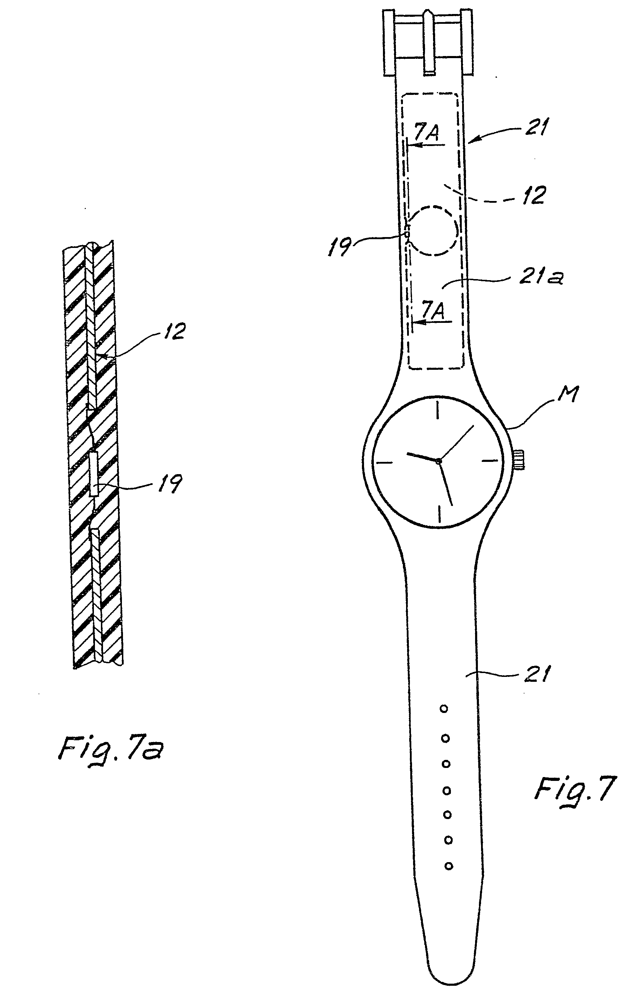

Dès lors, il devient possible de l'adapter à des objets relativement petits susceptibles d'être portés par des personnes et notamment à des montres-bracelets. L'invention prévoit donc d'associer le transpondeur à un tel objet, plusieurs modes de réalisation concernant cette adaptation étant représentés sur les figures 7 à 10.

Les figures 7 et 7A représentent une montre M pourvue d'un bracelet 21 dans l'une des branches 21a duquel est incorporée une antenne 12 de la forme représentée à la figure 4, le bracelet constituant dans ce cas le support diélectrique du transpondeur.

Bien entendu, le bracelet peut être réalisé en toute matière appropriée présentant une certaine constante diélectrique mais de préférence s'il est en matière plastique, l'antenne 12 peut y être incorporée lors du moulage du bracelet, ce qui revient à une fabrication particulièrement peu coûteuse. On notera que l'antenne 12 n'est raccordée à aucune source d'énergie et qu'elle n'apporte aucune gêne à l'utilisateur de la montre M.

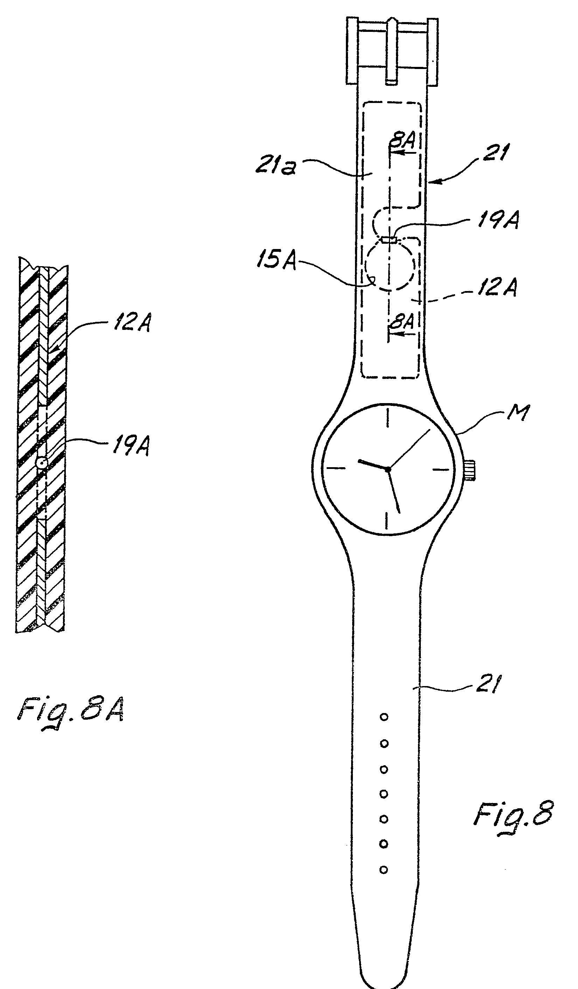

Les figures 8 et 8A montrent une variante du mode de réalisation des figures 7 et 7A en ce que la diode 19A, au lieu d'être placée longitudinalement dans la branche 21a du bracelet, l'est transversalement, la découpe 15A étant légèrement décalée par rapport au plan médian transversal de l'antenne 12A. Il s'est avéré que sur le plan électrique, ce décalage n'a que peu d'influence sur le rendement de transformation et que cette solution est particulièrement satisfaisante puisque la diode 19A étant placée transversalement dans la branche 21a, celle-ci peut parfaitement épouser la forme du poignet de l'utilisateur. Dans ce cas également et avantageusement, l'ensemble de l'antenne 12A est noyé dans la branche 21a au cours de son moulage.

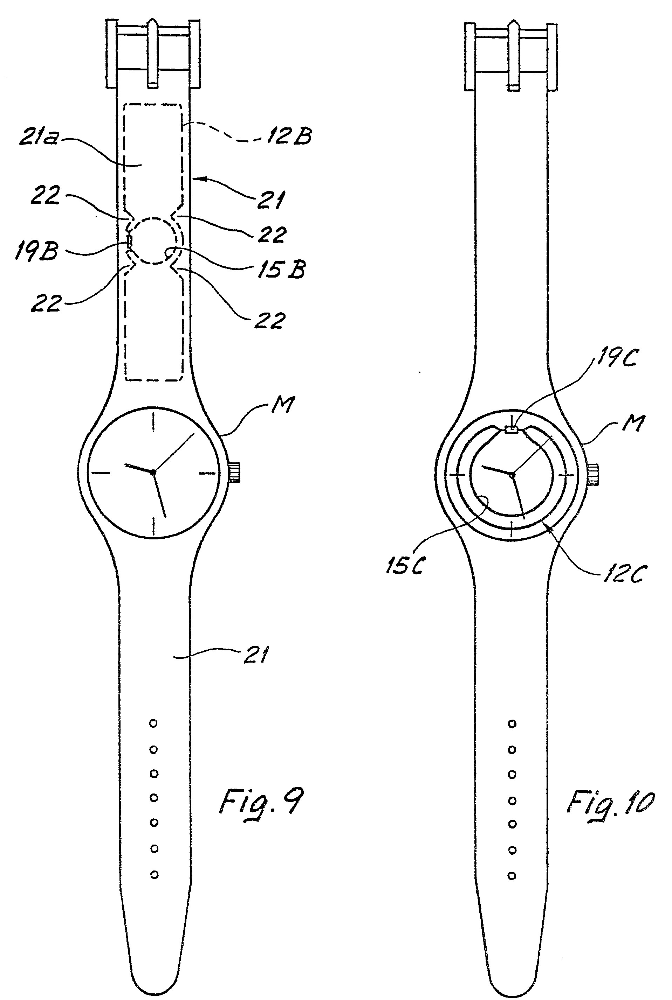

La figure 9 représente une autre variante dans laquelle l'antenne 12B, tout en présentant un même contour que les antennes précédentes, comporte de part et d'autre de la partie centrale constituant principalement la self-induction, des encoches 22 qui permettent de mieux délimiter et localiser le trajet de courant continu autour de la découpe 15B qui ici également se referme sur la diode 19B.

Il s'est avéré que la probabilité de détection reste satisfaisante même en réduisant à néant l'étendue des éléments rayonnants, mais en augmentant soit la puissance émise par l'antenne 6 (fig. 3) de l'ensemble émetteur-récepteur 1, soit en augmentant la sensibilité de réception de cet ensemble.

La figure 10 montre ainsi une variante du transpondeur dans laquelle celui-ci est logé à l'intérieur du boîtier de la montre M même, l'antenne se réduisant dans ce cas à une simple boucle 12C dont l'ouverture intérieure constitue la découpe 15C et qui se referme sur la diode 19C. Cette antenne peut être fixée, à titre d'exemple, sur le cadran de la montre M, ce cadran constituant ainsi le support diélectrique du transpondeur.

Enfin, le transpondeur de l'invention n'est pas destiné exclusivement à être utilisé pour la recherche de personnes victimes d'avalanches. Au contraire, on peut l'employer également pour localiser des personnes ou des objets se trouvant sur l'eau ou sous des décombres de bâtiments, par exemple. Ainsi, il est possible de fixer un ou plusieurs transpondeurs suivant l'invention sur une planche à voile, une embarcation de sauvetage et analogue pour permettre la localisation des personnes nécessitant du secours sur l'eau.

## Revendications

1. Transpondeur du type passif destiné notamment à la recherche de personnes, à l'aide d'un ensemble émetteur-récepteur de recherche (1) capable d'émettre à une première fréquence ($f_o$) et de recevoir à une seconde fréquence ($2f_o$) harmonique de cette première fréquence, ce transpondeur étant capable de recevoir à ladite première fréquence ($f_o$) et d'émettre à ladite seconde fréquence ($2f_o$) et comportant un support diélectrique (11, 21, 23) auquel est fixé une antenne (12, 12A, 12B, 12C) réalisée en une feuille mince conductrice (12, 12A, 12B, 12C), ladite antenne comportant un composant passif non linéaire (19, 19A, 19B, 19C) ainsi qu'une portion de conduction (16) électriquement parallèle à ce composant et constituant une dérivation en courant continu pour la polarisation de celui-ci, ce transpondeur étant caractérisé en ce que ladite feuille conductrice (12, 12A, 12B, 12C) présente une découpe (15, 15A, 15B, 15C) dont le bord (17, 18) définit un trajet de conduction refermé sur ledit composant passif (19, 19A, 19B, 19C), la forme de ladite découpe étant sélectionnée de façon à constituer d'une part ladite dérivation en courant continu et d'autre part une boucle de self-induction (14C) formant avec la capacité propre ($c_j$) du composant un circuit résonnant à ladite première fréquence ($f_o$).

2. Transpondeur suivant la revendication 1, caractérisé en ce que ladite antenne (19, 19A, 19B, 19C) comporte des éléments rayonnants (14a, 14b) s'étendant de part et d'autre de ladite boucle de self-induction et réalisés dans la même feuille mince.

3. Transpondeur suivant la revendication 2, caractérisé en ce que la distance sur laquelle s'étendent lesdits éléments rayonnants (14a, 14b) à partir de ladite boucle de self-induction (14c), est à peu près égale ou inférieure au quart de la longueur d'onde de ladite première fréquence ($f_o$).

4. Transpondeur suivant l'une quelconque des revendications précédentes, caractérisé en ce que des portions en forme de pointe (18) sont prévues aux endroits de raccordement dudit composant non linéaire (19) avec ladite boucle de self-induction (L).

5. Transpondeur suivant l'une quelconque des revendications 1 à 4, caractérisé en ce que ledit support diélectrique est le bracelet (21) d'une montre (M).

6. Transpondeur suivant la revendication 5, caractérisé en ce que ladite antenne (12, 12A, 12B) est noyée par moulage dans ledit bracelet.

7. Transpondeur suivant l'une quelconque des revendications 5 et 6, caractérisé en ce que ledit composant non linéaire (19A) est orienté transversalement dans le bracelet.

8. Transpondeur suivant la revendication 1, caractérisé en ce que ledit support diélectrique est le cadran (23) d'une montre (M).

9. Transpondeur suivant l'une quelconque des revendications 2 à 7, caractérisé en ce qu'à la jonction entre ladite boucle de self-induction (L) et lesdits éléments rayonnants (14a, 14b) sont prévues des encoches (22) délimitant partiellement le contour extérieur de cette boucle.

## Claims

1. Passive-type transponder especially intended for seeking out persons by means of a combined seeking transmitter-receiver (1) capable of transmitting at a first frequency ($f_o$) and receiving at a second frequency ($2f_o$) which is a harmonic of said first frequency, said transponder being capable to receive at said first frequency ($f_o$) and to transmit at said second frequency ($2f_o$) and including a dielectric support (11, 21, 23) to which is fixed an antenna (12, 12A, 12B, 12C) formed from a thin conductive sheet (12, 12A, 12B, 12C), said antenna including a non-linear passive component (19, 19A, 19B, 19C) as well as a conductive portion (16) electrically parallel to said component and forming a direct current-bypass for biaising of said component, this transponder being characterized in that said conductive sheet (12, 12A, 12B, 12C) comprises a cut-out portion (15, 15A, 15B, 15C) the edge of which (17, 18) defines a conductive path closed on said passive component (19, 19A, 19B, 19C), the shape of said cut-out portion being selected so as to form on the one hand said direct current-bypass, and on the other hand a self-inductive loop (14C) which together with the internal capacity (cj) of the component provides a circuit resonating at said first frequency ($f_o$).

2. Transponder according to claim 1, characterized in that said antenna (19, 19A, 19B, 19C) comprises radiating elements (14a, 14b) extending from both sides of said self-inductive loop and formed from the same thin sheet.

3. Transponder according to claim 2, characterized in that the distance over which the radiating elements (14a, 14b) extend from said self-inductive loop (14C) is substantially equal to or less than a quarter of the wave length of said first frequency ($f_o$).

4. Transponder according to anyone of the preceding claims, characterized in that point shaped portions (18) are provided at the connection points of said non-linear component (19) with said self inductive loop (L).

5. Transponder according to anyone of claims 1 to 4, characterized in that the dielectric support is the bracelet (21) of a watch (M).

6. Transponder according to claim 5, characterized in that the antenna (12, 12A, 12B) is moulded into said bracelet.

7. Transponder according to anyone of claims 5 or 6, characterized in that the non-linear component (19A) is transversaly oriented within the bracelet.

8. Transponder according to claim 1, characterized in that the dielectric support is the dial (23) of a watch (M).

9. Transponder according to anyone of claims 2 to 7, characterized in that notches (22) are provided at the junction between the self-inductive loop (L) and said radiating elements (14a, 14b) in order to limit partially the outer contour of said loop.

## Patentansprüche

1. Passiver Transponder, insbesondere bestimmt für die Personensuche mit Hilfe einer Such-Sender-Empfänger-Baugruppe (1), die mit einer ersten Frequenz ($f_o$) senden und einer zweiten Frequenz ($2f_o$), Harmonische der ersten Frequenz, empfangen kann, welcher Transponder mit der ersten Frequenz ($f_o$) empfangen und mit der zweiten Frequenz ($2f_o$) senden kann und einen dielektrischen Support (11, 21, 23) umfaßt, an dem eine Antenne (12, 12A, 12B, 12C), ausgeführt als dünne leitende Folie (12, 12A, 12B, 12C), befestigt ist, welche Antenne eine passive nichtlineare Komponente (19, 19A, 19B, 19C) umfaßt sowie einen Leitungsabschnitt (16) elektrisch parallel zu dieser Komponente, der einen Gleichstromnebenschluß für die Polarisation derselben bildet, welcher Transponder dadurch gekennzeichnet ist, daß die leitende Folie (12, 12A, 12B, 12C) einen Ausschnitt (15, 15A, 15B, 15C) aufweist, dessen Rand (17, 18) eine leitende Bahn definiert, die auf die passive Komponente (19, 19A, 19B, 19C) geschlossen ist, wobei die Form des Ausschnitts ausgewählt ist zur Bildung einerseits des Gleichstromnebenschlusses und andererseits einer Selbstinduktionsschleife (14C), die mit der Eigenkapazität ($c_j$) der Komponente einen Resonanzkreis für die erste Frequenz ($f_o$) bildet.

2. Transponder nach Anspruch 1, dadurch gekennzeichnet, daß die Antenne (19, 19A, 19B, 19C) strahlende Elemente (14a, 14b) umfaßt, die sich beidseits der Selbstinduktionsschleife erstrecken und aus derselben dünnen Folie gefertigt sind.

3. Transponder nach Anspruch 2, dadurch gekennzeichnet, daß die Distanz, über die sich die strahlenden Elemente (14a, 14b) ausgehend von der Selbstinduktionsschleife (14c) erstrecken, etwa gleich oder kleiner ist als ein Viertel der Wellenlänge der ersten Frequenz ($f_o$).

4. Transponder nach einem der vorangehenden Ansprüche, dadurch gekennzeichnet, daß Abschnitte in Form einer Spitze (18) an den Verbindungsstellen der nichtlinearen Komponente (19) mit der Selbstinduktionsschleife (L) vorgesehen sind.

5. Transponder nach einem der Ansprüche 1 bis 4, dadurch gekennzeichnet, daß der dielektrische Support das Armband (21) einer Uhr (M) ist.

6. Transponder nach Anspruch 5, dadurch gekennzeichnet, daß die Antenne (12, 12A, 12B) durch Vergießen in das Armband eingebettet ist.

7. Transponder nach einem der Ansprüche 5 und 6, dadurch gekennzeichnet, daß die nichtlineare Komponente (19A) quer im Armband orientiert ist.

8. Transponder nach Anspruch 1, dadurch gekennzeichnet, daß der dielektrische Support das Zifferblatt (23) einer Uhr (M) ist.

9. Transponder nach einem der Ansprüche 2 bis 7, dadurch gekennzeichnet, daß an der Verbindung zwischen der Selbstinduktionsschleife (L) und den strahlenden Elementen (14a, 14b) Einschnitte (22) vorgesehen sind, die teilweise die Außenkontur dieser Schleife begrenzen.

Fig.1

Fig.2

Fig.3

19

α 18    18 α

## Fig. 4a

13    11    12    18  19  18   0

14a
17    17
15    16    14c
14b

$\frac{1}{4}\lambda_0$    $\frac{1}{4}\lambda_0$

$\frac{1}{2}\lambda_0$

## Fig. 4

$C_j$

$U_g$    $R_p$    $L$    $QU_g$    20a

20b

## Fig. 5

9

$U_{Diode}$

$\ell_2$

$\ell_1$

$i_{Diode}$

$P_2$

$P_1$

$QU_g$ polarisé

$U_g$ polarisé

$U_g$

Fig. 6

Fig. 7a

Fig.7

Fig.8A

Fig.8

*Fig. 9*

*Fig. 10*